# EUROPEAN PATENT APPLICATION

(11) **EP 4 693 158 A1**
(43) Date of publication of application: **11.02.2026**
(21) Application number: 24779584.2
(22) Date of filing: 15.03.2024
(51) Int. Cl.: G06Q 50/10, G06Q 30/0601

(54) **INFORMATION PROCESSING DEVICE, INFORMATION PROCESSING SYSTEM, INFORMATION PROCESSING METHOD, AND PROGRAM**

(30) Priority: 30.03.2023 JP 2023055017
(71) Applicant: FUJIFILM Corporation, Tokyo Tokyo 106-8620 (JP)
(72) Inventor: TSUKAGOSHI, Kazuma, Saitama-shi, Saitama 3319624 (JP)
(74) Representative: Meissner Bolte Partnerschaft mbB
(86) International application number: PCT/JP2024/010225
(87) International publication number: WO 2024/203456

(57) **Abstract**

Provided are an information processing apparatus, an information processing system, an information processing method, and a program capable of performing a highly accurate preference analysis. An information processing apparatus (10) includes a processor (12). The processor (12) acquires decoration information applied to a photographic print, and estimates a preference of a specific person based on the decoration information.

## Description

### BACKGROUND OF THE INVENTION

### 1. Field of the Invention

The present invention relates to an information processing apparatus, an information processing system, an information processing method, and a program.

### 2. Description of the Related Art

In recent years, as it has become easier to create communities through a social networking service (SNS) and similar platforms, awareness of a variety of individual preferences has increased, and an increasing number of people are choosing to live their lives in ways that are more in line with their own personalities. In marketing, as well, it is becoming increasingly important to understand individual preferences and make recommendations that match the preferences.

As one method, there is an attempt to analyze captured images captured by a user and discriminate the user's preferences from the analysis results.

For example, JP2017-59245A describes a technology for automatically generating a composite image by analyzing a user's preferences from among predefined preferences based on a group of a plurality of images owned by the user.

### SUMMARY OF THE INVENTION

One embodiment of the technology of the present disclosure provides an information processing apparatus, an information processing system, an information processing method, and a program capable of performing a highly accurate preference analysis.

An information processing apparatus according to a first aspect of the present invention is an information processing apparatus comprising a processor, in which the processor is configured to acquire decoration information applied to a photographic print, and estimate a preference of a specific person based on the decoration information.

In the information processing apparatus according to a second aspect, preferably, in the first aspect, the processor is configured to acquire an image of the photographic print and divide the image into a frame region and an image region.

In the information processing apparatus according to a third aspect, preferably, in the second aspect, the processor is configured to analyze a type or a pattern of the frame, and estimate the preference of the specific person based on a result of the analysis.

In the information processing apparatus according to a fourth aspect, preferably, in the first aspect, the processor is configured to recommend a frame or a decoration based on a result of the estimation.

In the information processing apparatus according to a fifth aspect, preferably, in the fourth aspect, the processor is configured to cause a display unit to display the recommended frame or the recommended decoration combined with the photographic print.

In the information processing apparatus according to a sixth aspect, preferably, in the first aspect, the processor is configured to recommend a product based on a result of the estimation.

In the information processing apparatus according to a seventh aspect, preferably, in the first aspect, the processor is configured to recommend an event, a community, or a friend based on a result of the estimation.

In the information processing apparatus according to an eighth aspect, preferably, in the first aspect, the processor is configured to determine, based on the photographic print, whether a person appearing in the photographic print belongs to a first category having a close relationship to a user, or whether the person belongs to a second category having a distant relationship to the user, and make a recommendation based on a result of the determination.

In the information processing apparatus according to a ninth aspect, preferably, in the eighth aspect, the processor is configured to acquire a plurality of captured images owned by the user, and analyze the plurality of captured images, and determine that the person belongs to the first category in a case in which the number of times that the person appears together with the user is equal to or greater than a threshold value.

In the information processing apparatus according to a tenth aspect, preferably, in the eighth aspect, the processor is configured to acquire a plurality of captured images owned by the user, and analyze the plurality of captured images, and determine that the person belongs to the second category in a case in which the number of times that the person appears together with the user is less than the threshold value.

In the information processing apparatus according to an eleventh aspect, preferably, in the eighth aspect, the processor is configured to perform an image search on the Internet for the appearing person, and determine whether the appearing person belongs to the first category or the second category based on a result of the image search.

In the information processing apparatus according to a twelfth aspect, preferably, in the eleventh aspect, the processor is configured to, in a case in which a signature is detected in the frame region and/or the image region, determine that the person belongs to the first category or the second category based on the result of the image search.

In the information processing apparatus according to a thirteenth aspect, preferably, in the eighth aspect, the processor is configured to, in a case in which it is determined that the person belongs to the second category, specify an organization to which the person belongs by searching the Internet and recommend a product sold by the organization.

In the information processing apparatus according to a fourteenth aspect, preferably, in the eighth aspect, the processor is configured to acquire a plurality of captured images owned by the user, and in a case in which the person does not belong to the second category, perform face recognition processing on the plurality of captured images, and in a case in which a difference between facial feature values of any person is equal to or less than a threshold value, determine that the person is a person belonging to the first category.

In the information processing apparatus according to a fifteenth aspect, preferably, in the eighth aspect, the processor is configured to recommend a product in a case in which it is determined that the person belongs to the first category, and recommend an event in a case in which it is determined that the person belongs to the second category.

In the information processing apparatus according to a sixteenth aspect, preferably, in the first aspect, the processor is configured to acquire a plurality of photographic prints, estimate the preference of the specific person based on feature values of the plurality of photographic prints, determine whether or not the photographic prints are shared with another user, and in a case in which the photographic prints are shared, increase weighting of the feature values of the shared photographic prints.

An information processing system according to a seventeenth aspect is an information processing system in which a terminal having a first processor and a server having a second processor are connected via a network, in which the first processor is configured to acquire an image of a photographic print, and transmit the image to the server, and the second processor is configured to detect decoration information from the image, and estimate a preference of a specific person based on the decoration information.

An information processing system according to an eighteenth aspect is an information processing system in which a terminal having a first processor and a server having a second processor are connected via a network, in which the first processor is configured to acquire decoration information applied to a photographic print, extract a feature value of the decoration information, and transmit the feature value to the server, and the second processor is configured to estimate a preference of a specific person based on the feature value.

An information processing method according to a nineteenth aspect is an information processing method of an information processing apparatus including a processor, the information processing method comprising a step of acquiring, by the processor, decoration information applied to a photographic print, and a step of estimating, by the processor, a preference of a specific person based on the decoration information.

A program according to a twentieth aspect is a program for executing an information processing method of an information processing apparatus including a processor, the program causing the processor to execute a step of acquiring decoration information applied to a photographic print, and a step of estimating a preference of a specific person based on the decoration information.

### BRIEF DESCRIPTION OF THE DRAWINGS

FIG. 1 is a diagram showing a hardware configuration of an information processing apparatus.
FIG. 2 is a block diagram showing functions realized by a processor.
FIG. 3 is a flowchart showing an information processing method.
FIG. 4 is a conceptual diagram of a photographic print to which no decoration has been applied.
FIG. 5 is a conceptual diagram of the photographic print to which decorations have been applied.
FIG. 6 is a block diagram showing functions realized by a processor.
FIG. 7 is a flowchart showing an information processing method.
FIG. 8 is a diagram illustrating capturing of a photographic print performed by an information processing apparatus.
FIG. 9 is a diagram illustrating an example of a recommendation of a ready-made frame.
FIG. 10 is a configuration diagram showing an information processing system.
FIG. 11 is a flowchart showing an example of operations of a server and a user terminal.
FIG. 12 is a flowchart showing another example of the operations of the server and the user terminal.
FIG. 13 is a block diagram showing a function realized by a processor.
FIG. 14 is a flowchart showing an information processing method.
FIG. 15 is a diagram illustrating an example of a determination method of a category determination unit.
FIG. 16 is a conceptual diagram showing a smartphone case to which a decoration has been applied.

### DESCRIPTION OF THE PREFERRED EMBODIMENTS

Hereinafter, an information processing apparatus, an information processing system, an information processing method, and a program according to preferred embodiments of the present invention will be described with reference to the accompanying drawings.

First, circumstances leading to the present invention will be described.

As described in the above-mentioned JP2017-59245A, in the related art, attempts have been made to discriminate a user's preferences from a group of images owned by the user.

However, it is difficult to acquire information about a user's own fashion and the like only from captured images of the user himself/herself. Furthermore, in recent years, as preferences have become more specialized, categories that would previously have been grouped together as fashion for similar preferences have now become more specialized, such as a pretty type and a teaser type. In addition, because a person's fashion or belongings are selected with these categories in mind, it is difficult to estimate a person's preferences in fashion or goods design based only on information obtained from captured images.

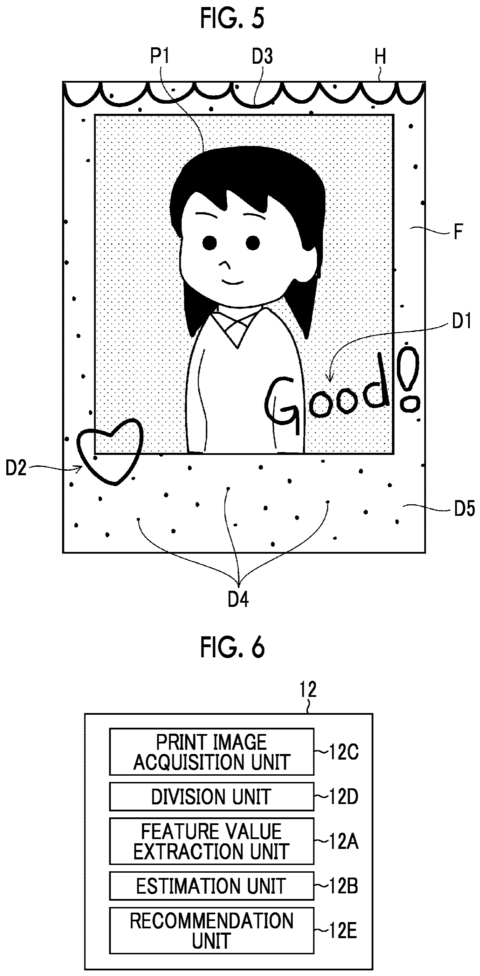

On the other hand, in a case in which a photographic print (see FIG. 5) is produced by printing a captured image, a character may be handwritten or decorations may be applied to the printed surface of the photograph (image region) or to the surrounding frame (border: frame region). Additionally, people are increasingly enjoying putting their photographic prints in special cases (such as smartphone cases) to add a personal touch to the photographic prints themselves.

Also, in a case of selling photographs of idols, the idol's signature is sometimes included on the photographic prints before being sold. Additionally, by applying distinctive decorations to photographic prints, it is common to add the distinctive features of an idol (or an idol group) to create a sense of unity, or to add the distinctive features of a specific event to create a sense of unity.

In the present invention described below, the decorations applied to photographic prints (including information about the frame or case in which the photograph is placed) are analyzed, making it possible to obtain accurate analysis results of the user's personal preferences. In addition, by obtaining the highly accurate analysis results of preferences, it becomes possible to effectively recommend products that match the preferences, information on favorite idols, and event information.

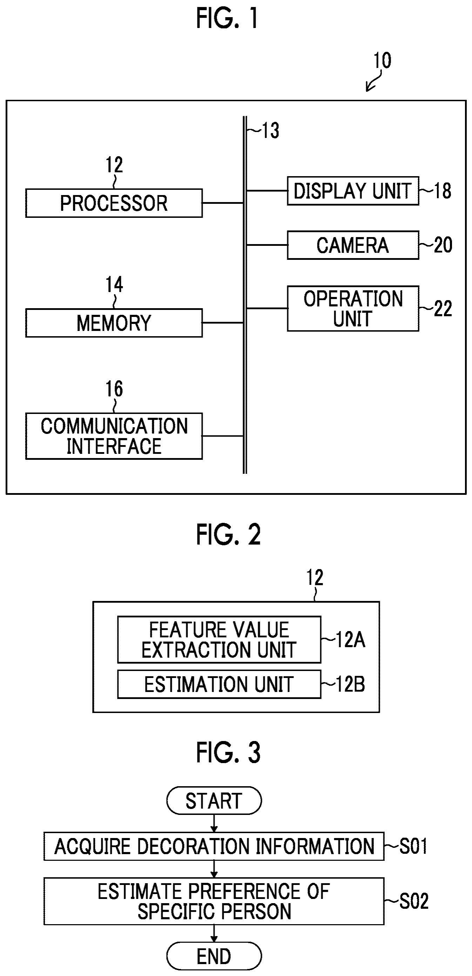

FIG. 1 is a diagram showing a hardware configuration of an information processing apparatus of the present invention.

An information processing apparatus 10 is, for example, a terminal. Here, the terminal includes a smartphone, a laptop computer, a tablet terminal, an imaging apparatus connectable to a network NW, and the like. The information processing apparatus 10 comprises at least a processor (a first processor) 12, a memory 14, a communication interface 16, a display unit 18, a camera 20, and an operation unit 22.

The processor 12 is configured of a central processing unit (CPU). Further, the processor 12 may be configured to include a graphics processing unit (GPU). The processor 12 is connected to the memory 14, the communication interface 16, the camera 20, and the operation unit 22 via a bus 13. The processor 12 can realize a variety of functions by executing dedicated programs stored in the memory 14.

The memory 14 includes a memory that is a main storage device and a storage that is an auxiliary storage device. The memory 14 may be, for example, a semiconductor memory, a hard disk drive (HDD) device, a solid-state drive (SSD) device, or a plurality of combinations thereof. In the memory 14, various programs including an image processing program, data, and the like are stored.

The communication interface 16 is a communication unit that performs wireless or wired communication with the information processing apparatus 10. Also, the communication interface 16 functions as a wireless communication unit, and performs wireless communication with a base station device connected to a mobile communication network. The wireless communication is used to connect to the Internet, and various file data such as audio data and image data, e-mail data, and the like are transmitted and received, and web data, streaming data, and the like are received.

The display unit 18 displays a video or still images captured by the camera 20. Furthermore, the display unit 18 displays a video or still images stored in the memory 14 by the information processing apparatus 10. Further, the display unit 18 can display recommended information (product information, event information, and idol information) which will be described later. The display unit 18 is also configured as a so-called touch panel, and functions as a part of an operation unit 22 that receives an input from the user.

The camera 20 captures a video and still images. For example, the user inputs an instruction to capture still images via the operation unit 22.

The operation unit 22 is configured with a touch screen and buttons 22A (see FIG. 3) provided on the display unit 18. By operating the operation unit 22, it functions as a shutter button in a case of capturing a still image.

### <First Embodiment>

A first embodiment will be described. In the present embodiment, decoration information of a decoration applied to a photographic print is acquired, and preference estimation is performed.

FIG. 2 is a block diagram showing functions realized by the processor 12 of the present embodiment. FIG. 3 is a flowchart showing an information processing method performed by the processor 12 of the information processing apparatus 10 executing a dedicated program.

The processor 12 constitutes a feature value extraction unit 12A and an estimation unit 12B. These functions operate as follows in the flow shown in FIG. 3.

First, the feature value extraction unit 12A acquires decoration information about the decoration applied to the photographic print (Step S01). Note that the decoration information refers to information indicating the applied decoration. The decoration information includes, for example, information such as the type of decoration (a handwritten character, a handwritten mark, or a sticker), the color of the decoration, and the position of the decoration.

Here, photographic prints and decorations will be described.

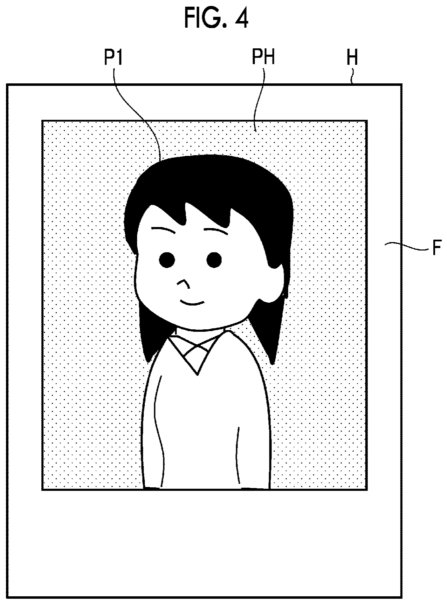

FIGS. 4 and 5 are diagrams illustrating photographic prints and decorations. FIG. 4 is a conceptual diagram of a photographic print H to which no decoration has been applied, and FIG. 5 is a conceptual diagram of the photographic print H to which a decoration has been applied.

The photographic print H is configured with an image region PH and a frame region F. An image of a person P1 is printed in the image region PH. The frame region F is disposed to surround the rectangular image region PH on all four sides. The photographic print H shown in FIG. 4 is a print made using a standard film (instant film), and the frame region F of the standard film is composed of a plain white background. The user can decorate the frame region F and the image region PH with colored pens or the like (see FIG. 5). Further, the user can decorate the device by attaching stickers or the like.

As shown in FIG. 5, the user can apply decorations D1 to D5 to the photographic print H by handwriting. The decoration D1 is a decoration in which the user has handwritten the character "Good!" (in red). The decoration D2 is a decoration in which the user has handwritten a heart mark (in red). The decoration D3 is a decoration in which the user has handwritten leaves (green). The decoration D4 is a decoration in which the user has handwritten seeds (in black). Moreover, the decoration D5 is a decoration that paints the frame region F other than the decoration D3 and the decoration D4 pink.

The photographic print H is decorated with leaves (decoration D3) and seeds (decoration D4) on a pink background (decoration D5), giving the overall image a strawberry-like decoration. Furthermore, a heart mark (decoration D2) and "Good!" (decoration D1) are decorated thereto. Such decorations D1 to D5 can be applied freely, and by analyzing the applied decorations, a person's preference can be accurately determined.

The feature value extraction unit 12A acquires decoration information for each of the decorations D1 to D5 or for the decorations D1 to D5 as a whole. This decoration information includes information indicating the features of the above-mentioned decorations D1 to D5. The feature value extraction unit 12A is configured using a trained model that acquires decoration information from decorations applied to photographic prints.

Referring back to FIG. 3, next, the estimation unit 12B estimates a preference of a specific person (Step S02).

Here, the specific person refers to a symmetric person whose preference is estimated by the information processing apparatus 10. For example, a specific person is a user who owns the photographic print H (the owner of the account for using the information processing apparatus 10). For example, as will be described in a fourth embodiment, when a person P1 appearing in a photographic print H is a person of a second category (for example, a celebrity), the specific person may be the person P1 appearing in the photographic print H, who is a target of preference estimation, or the user who owns the photographic print H as described above, or both the person appearing in the photographic print H and the user may be a target of preference estimation. For example, it can be estimated that decorations on a photographic print in which an idol is captured were applied by the idol for the user who is a fan. Therefore, it is considered that the preferences of the idol can be estimated from the decorations. In addition, since it is estimated that the user, who is a fan, likes the activities of the idol and owns the photographic prints, it is considered that the decoration reflects not only the preferences of the idol but also those of the user. Furthermore, in a case in which an image of a photographic print is shared with another user and is held, it can be estimated that the decoration was applied by that other user, and therefore that other user may be a target of preference estimation. In addition, since it may be estimated that receiving a shared image means that the other user and the original user have similar preferences to a certain extent, the original user may also be a target of preference estimation.

In addition, the preference refers to a tendency to make selections in purchasing products and services and other activities. This can be congenital or acquired. Further, it may be something that is brought to consciousness or something that is unconscious and not noticed. In addition, preferences here include hobbies.

The estimation unit 12B can estimate the preference of a specific person using a variety of methods. For example, the estimation unit 12B estimates preferences using a trained model that estimates preferences from decoration information acquired from the decorations D1 to D5. For example, the estimation unit 12B estimates a preference of "pretty type" from decoration information obtained from decorations D1 to D5 as shown in FIG. 5.

As described above, the information processing apparatus 10 estimates preferences based on decoration information obtained from decorations applied to photographic prints. Accordingly, it is possible to estimate the preference with high accuracy.

Further, preferences estimated in this way can be applied to a variety of purposes. For example, it is considered that recommendations of products, events, and the like are made based on the estimated preferences. Also, for example, it is considered that the processing of apps installed on the terminal may be changed based on the estimated preferences. For example, in a case in which preferences are on the axis of "flashy preference" and "modest preference", the processing of an app for a user who is estimated to have a modest preference may be changed based on the estimated preferences, such as by reducing the frequency of recommendations.

### <Second Embodiment>

Next, a second embodiment will be described. In the second embodiment, an information processing apparatus 10 acquires an image of a photographic print H, divides the photographic print H into a frame region F and an image region PH, and acquires decoration information. Also, in the second embodiment, recommendations are made based on estimated preferences.

FIG. 6 is a block diagram showing functions realized by a processor 12 of the present embodiment. The parts that have already been described are given the same reference numerals and the description will be omitted.

The processor 12 includes a print image acquisition unit 12C, a division unit 12D, a feature value extraction unit 12A, an estimation unit 12B, and a recommendation unit 12E.

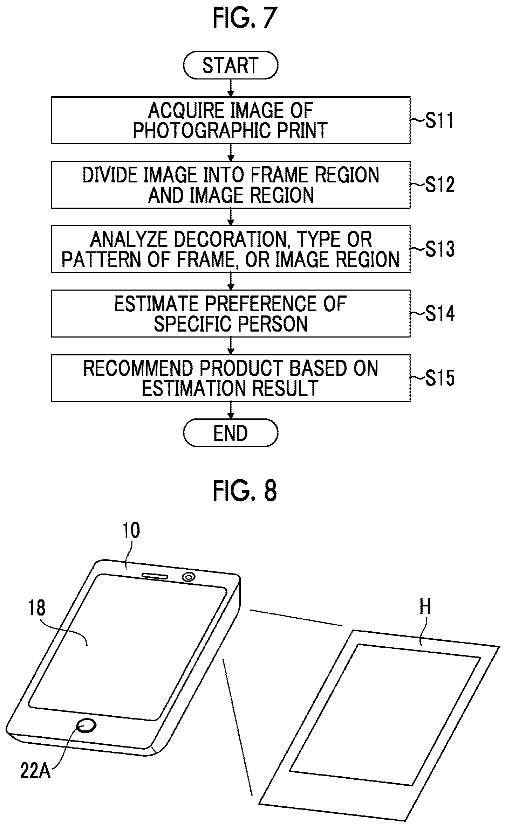

FIG. 7 is a flowchart showing an information processing method. The information processing method is performed by the processor 12 executing a dedicated program.

First, the print image acquisition unit 12C acquires the image of the photographic print H (Step S11).

FIG. 8 is a diagram illustrating capturing of the photographic print H performed by the information processing apparatus 10.

The information processing apparatus 10 captures the photographic print H using a camera 20. The information processing apparatus 10 is provided with a lens that constitutes a part of the camera 20 on the surface opposite to the display unit 18 (the rear surface). The information processing apparatus 10 then capture the photographic print H through the lens. The photographic print H is captured such that the entire photographic print H fits within the angle of view. The print image acquisition unit 12C specifies a region in which the photographic print H appears in the captured image of the photographic print H, and acquires the image of the photographic print H. In a case in which the information processing apparatus 10 has a scanner function, the image may be acquired by scanning the photographic print H.

Next, the division unit 12D divides the image of the photographic print H into a frame region F and an image region PH (Step S12). Specifically, the division unit 12D divides the image of the photographic print H into an image region PH, where the image is printed onto the print (film), and a frame region F that surrounds the image region PH. The division unit 12D can divide the image into the image region PH and the frame region F using a known image processing technique.

Thereafter, the feature value extraction unit 12A analyzes the decoration, the type or pattern of the frame, or the image region PH (Step S13). Specifically, the feature value extraction unit 12A acquires decoration information from the decorations D1 to D5 applied to the photographic print H. In addition, the feature value extraction unit 12A analyzes the color, pattern, and the like of the frame region F to discriminate the type or pattern of the frame. In addition, the image region PH is analyzed to extract the feature value of the image printed in the image region. The feature value extraction unit 12A is configured using a trained model.

Next, the estimation unit 12B estimates a preference of a specific person (Step S14). The estimation unit 12B estimates the preference of a specific person from the decoration information, the discrimination result of the type or pattern of the frame region, and the feature value of the image region PH. Note that the estimation unit 12B is configured using a trained model and estimates the preference of a specific person.

Next, the recommendation unit 12E recommends a product, an event, a community, and/or a friend based on the estimation result of the preference (Step S15). Also, the recommendation unit 12E can recommend a frame or a decoration. The recommendation unit 12E is configured using a trained model and makes recommendations in line with the preference of a specific person.

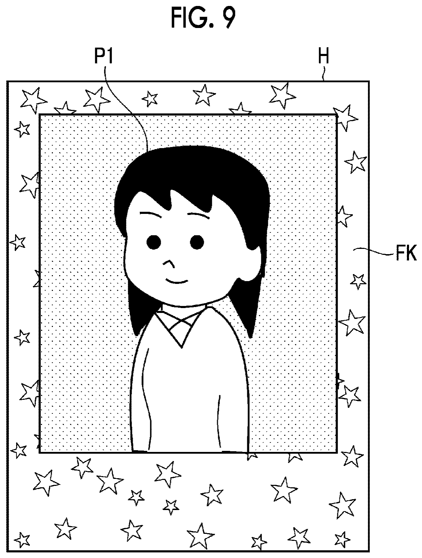

FIG. 9 is a diagram illustrating an example of a recommendation of a ready-made frame.

The recommendation unit 12E combines the recommended frame or the recommended decoration with the photographic print and displays the composite image on the display unit 18. The recommendation unit 12E recommends a frame FK to a user (a specific person) who owns the photographic print H, based on the estimated preference. In this case, the recommendation unit 12E generates a composite image using the image region PH of the photographic print H and the ready-made frame FK, and displays the composite image on the display unit 18.

In this way, the recommendation unit 12E displays the composite image on the display unit 18, making it easier for the user to imagine the recommended frame and to select the recommended product or the like.

### <Third Embodiment>

Next, a third embodiment will be described. In the present embodiment, an information processing system will be described.

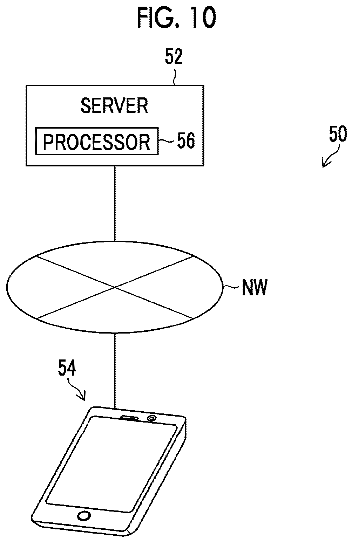

FIG. 10 is a configuration diagram showing an information processing system 50.

The information processing system 50 includes a server 52 and a user terminal 54 connected to the server 52 via a network NW. Although only one user terminal 54 is shown in FIG. 10, two or more user terminals 54 may be included.

The server 52 is configured with a computer, a workstation, or the like, and includes a processor (second processor) 56, a memory, an input/output interface, and the like. In addition, as for the hardware configuration of the server, only the processor (second processor) 56 is shown, and other configurations (for example, a memory and input/output interface) are not shown.

The processor 56 is composed of a central processing unit (CPU) and the like, and is a portion that controls each unit of the server 52 in an integrated manner and estimates preferences based on decoration information. Specifically, similarly to the processor 12 of the information processing apparatus 10 described with reference to FIG. 6, the processor 56 realizes the functions of a print image acquisition unit, a division unit, a feature value extraction unit, an estimation unit, and a recommendation unit. Each of the feature value extraction unit, the estimation unit, and the recommendation unit is configured using a trained model.

The memory includes a flash memory, a read-only memory (ROM), a random-access memory (RAM), a hard disk apparatus, and the like. The flash memory, the ROM, or the hard disk apparatus is a non-volatile memory that stores an operating system, various programs including an information processing program for executing the information processing method according to an aspect of the present invention, and the like.

The RAM functions as a work area of processing by the processor 56. The RAM also temporarily stores various programs stored in a flash memory or the like, data used for arithmetic processing, and the like. Further, a part (RAM) of the memory may be built in the processor 56.

The server 52 is connected to the network NW such as the Internet, and exchanges data with the user terminal 54 via the network NW.

The user terminal 54 includes a user-owned smartphone, laptop computer, or tablet terminal, or an imaging apparatus connectable to the network NW, and the like. The user terminal 54 can transmit, for example, an image of a photographic print H to the server 52 and can receive data from the server 52. The hardware configuration of the user terminal 54 is the same as the hardware configuration of the information processing apparatus 10 already described (see FIG. 1), and therefore a description thereof will be omitted here.

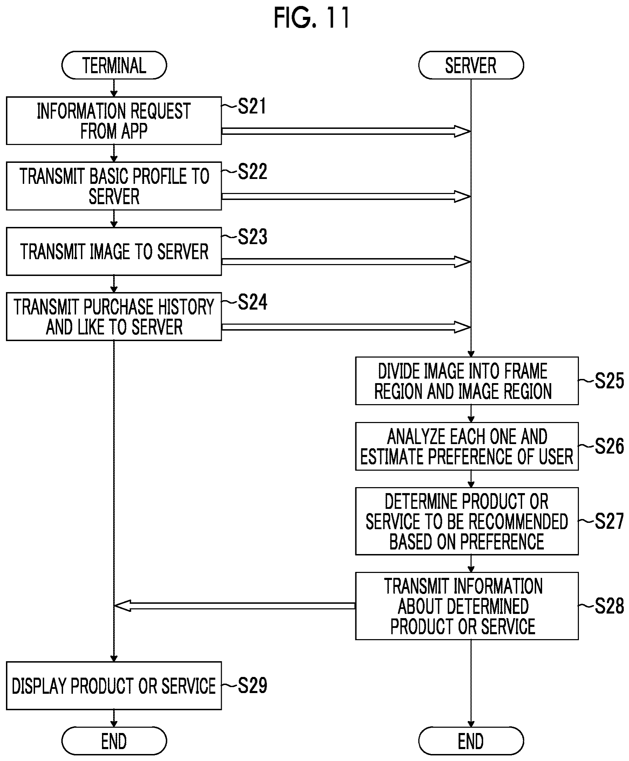

FIG. 11 is a flowchart showing an example of operations of the server 52 and the user terminal 54 in the information processing system 50.

First, in a case in which an application (app) installed in the user terminal 54 is activated, an information request is displayed on the display unit (Step S21). The user inputs information in response to the information request from the application, and the input information is transmitted to the server 52 via the network NW (Step S22). For example, an information request from the application is a request for a basic profile such as capturing of the user's face, his/her name, and his/her date of birth.

Next, an image of the photographic print obtained by capturing the photographic print by the user terminal 54 or an image of the photographic print stored in the user terminal 54 is transmitted to the server 52 (Step S23). Thereafter, the purchase history of products, event tickets, and the like, purchased by the user using the user terminal 54, which is stored in the user terminal 54, is transmitted to the server 52 (Step S24).

The processor 56 of the server 52 acquires an image of the photographic print from the user terminal 54 and divides the image into a frame region and an image region (Step S25). Next, the processor 56 of the server 52 analyzes the frame region, the image region, and the decoration of the photographic print, respectively, and estimates a preference (Step S26). Specifically, the processor 56 detects and analyzes decorations to acquire decoration information, analyzes the image region to extract feature values, and analyzes the frame region to discriminate the type or pattern of the frame, thereby estimating preferences. The processor 56 of the server 52 then determines the product or the service to be recommended based on the estimated preference (Step S27). The server 52 transmits information about the determined product or service to the user terminal 54 (Step S28).

Thereafter, the user terminal 54 displays information about the product or the service on the display unit based on the information transmitted from the server 52 (Step S29).

As described above, in the present embodiment, the information processing system acquires decoration information from the decoration applied to the photographic print, and estimates preferences with high accuracy. Further, the information processing system 50 can effectively recommend products or services based on highly accurate preference estimation.

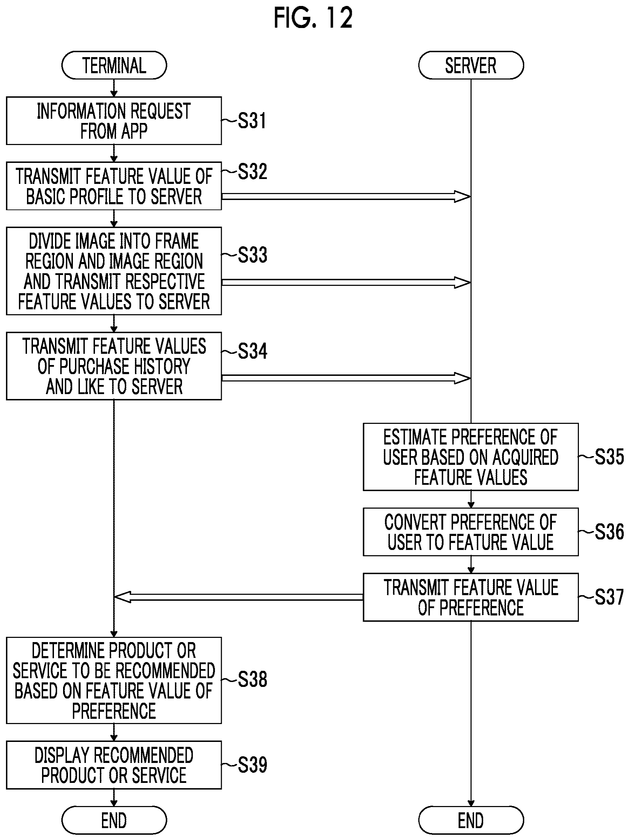

FIG. 12 is a flowchart showing another example of the operations of the server 52 and the user terminal 54 in the information processing system 50.

In the information processing system 50 of the present example, an edge type system configuration is employed. By employing an edge-type system configuration, user information is converted into feature values and transmitted to the server 52 such that personal information that can be detected by other people is not recorded on the server 52.

First, in a case in which an application (app) installed in the user terminal 54 is activated, an information request is displayed on the display unit (Step S31). In response to the information request from the application, the user inputs a basic profile, and the input basic profile is converted into feature values and transmitted to the server 52 via the network NW (Step S32).

Next, the user terminal 54 divides the image of the photographic print obtained by capturing the photographic print by the user terminal 54 or the image of the photographic print stored in the user terminal 54 into a frame region and an image region, converts each of the applied decorations, frame region, and image region into feature values, and transmits the feature values to the server (Step S33). Thereafter, the feature values of the purchase history of products, event tickets, and the like, purchased by the user using the user terminal 54, which is stored in the user terminal 54, are transmitted to the server 52 (Step S34).

The processor 56 of the server 52 estimates the preference of the user based on the feature values of the frame region and the image region of the acquired image of the photographic print (Step S35). Thereafter, the processor 56 of the server 52 converts the preference of the user into a feature value (Step S36). Thereafter, the server 52 transmits the feature value of the preference to the user terminal 54 (Step S37).

Thereafter, the user terminal 54 determines a product or a service to be recommended based on the received feature value of the preference (Step S38). The user terminal 54 then displays the recommended product or service on the display unit (Step S39).

In the above example, the server 52 estimates preferences based on the feature value (see Step S35), but the present invention is not limited thereto example. For example, the user terminal 54 may estimate preferences based on the feature value, convert the estimated preferences into feature values, and transmit the feature values to the server 52. In the above example, the user terminal 54 determines the product or service to be recommended based on the feature value of the preference (Step S38), but the present invention is not limited thereto example. For example, the server 52 may determine a product or a service to be recommended based on the estimated preferences, convert the recommended product or service into a feature value, and transmit the feature value to the user terminal 54.

In addition, in the server 52, "estimating the preference of the user based on the acquired feature value" (Step S35) is performed using the trained model. In addition, in the user terminal 54, "determining a product or a service to be recommended based on the feature value of preference" (Step S38) is performed using a trained model. The parameters of these trained models continue to be trained even after they are implemented in the information processing system 50 according to the present embodiment. This learning is achieved by obtaining the permission from the user, and then having the user provide feedback on whether or not the user has actually purchased a product or a service related to a particular recommendation, and using this information as new training data.

As described above, in the present embodiment, the information processing system 50 estimates preferences with high accuracy. Further, the information processing system 50 can effectively recommend products or services based on highly accurate preference estimation. Furthermore, according to the edge-type information processing system 50, information (personal information) that can specify an individual using the user terminal 54 is not transmitted to the server 52, making it possible to achieve high security.

### <Fourth Embodiment>

Next, a fourth embodiment will be described. In the present embodiment, a category determination is performed for a person appearing in a photographic print, and the result of the category determination is used for recommendations.

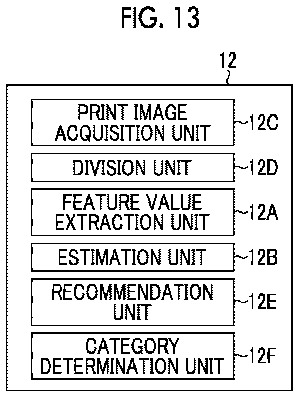

FIG. 13 is a block diagram showing functions realized by the processor 12 of the information processing apparatus 10 according to the present embodiment. The hardware configuration of the information processing apparatus 10 has already been described with reference to FIG. 1, and therefore a description thereof will be omitted here.

The processor 12 includes a print image acquisition unit 12C, a division unit 12D, a feature value extraction unit 12A, an estimation unit 12B, a recommendation unit 12E, and a category determination unit 12F.

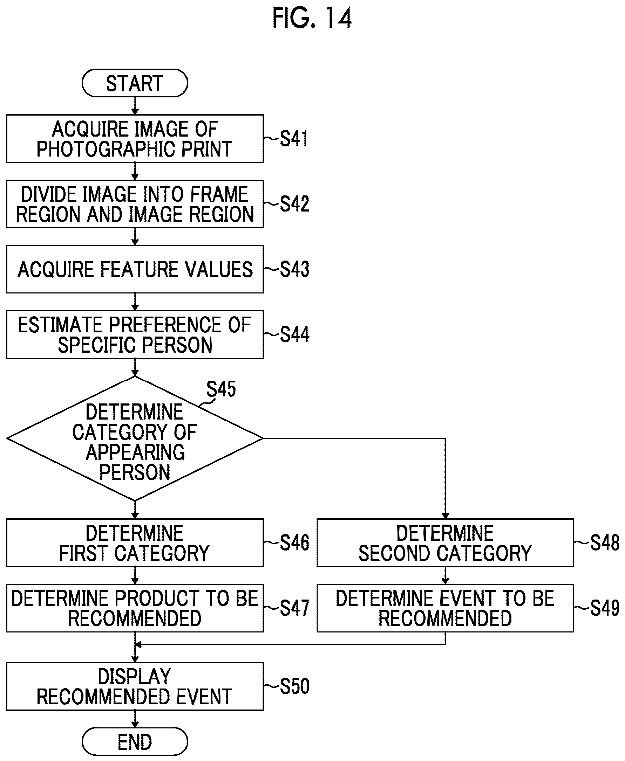

FIG. 14 is a flowchart showing an information processing method. The information processing method is performed by the processor 12 of the information processing apparatus 10 executing a dedicated program.

First, the print image acquisition unit 12C acquires an image of a photographic print (Step S41). Thereafter, the division unit 12D divides the image of the photographic print into a frame region and an image region (Step S42). Next, the feature value extraction unit 12A analyzes each of the decoration, the frame region, and the image region to acquire feature values (decoration information, frame type or pattern, and feature values of the image region) (Step S43). Next, the estimation unit 12B estimates the preference of a specific person based on the acquired feature value (Step S44).

Next, the category determination unit 12F determines whether the person appearing in the photographic print is a person belonging to a first category or a person belonging to a second category (Step S45). Here, the person belonging to the first category is the user himself/herself, the user's family, or the user's friends, or the like. The person belonging to the second category is a symmetric person whom the user supports, for example, a celebrity such as an idol. Note that the category determination by the category determination unit 12F will be described in detail later. In the shown example, the category determination unit 12F determines whether a person appearing in a photographic print belongs to the first category or the second category, but the present invention is not limited thereto. For example, the category determination unit 12F may determine that the person appearing in the photographic print belongs to the first category, the second category, or another category.

In a case in which the category determination unit 12F determines that the person appearing in the photographic print belongs to the first category (Step S46), the recommendation unit 12E determines a product to be recommended based on the estimated preference (Step S47). On the other hand, in a case in which the category determination unit 12F determines that the person appearing in the photographic print belongs to the second category (Step S48), the recommendation unit 12E determines an event for the person appearing in the photographic print to be recommended based on the estimated preference (Step S49). After that, the recommended product or event is displayed on the display unit 18 (Step S50).

As described above, in the present embodiment, the category of a person appearing in a photographic print is determined, and a recommendation is made based on the estimated preference and the determined category. Accordingly, it is possible to make an effective recommendation to the user.

Next, the aspect of determination in the category determination unit 12F will be described. The category determination unit 12F can determine the category through a variety of methods. In the following, specific examples of Aspects 1 to 6 of the determination of the category determination unit 12F will be described. Note that the information processing apparatus 10 is connected to the Internet, and necessary information can be appropriately acquired via the Internet.

### (Aspect 1 of Determination)

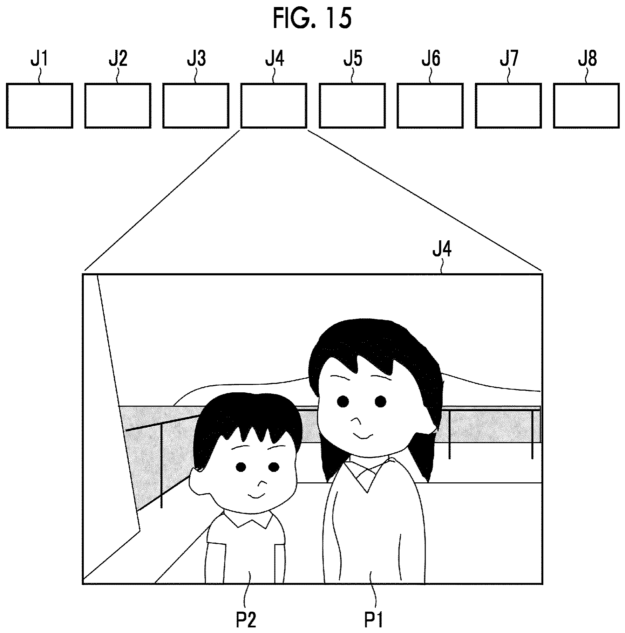

FIG. 15 is a diagram illustrating an example of a determination method of the category determination unit 12F.

The category determination unit 12F acquires a plurality of captured images J1 to J8 owned by the user in the information processing apparatus 10, and analyzes the plurality of captured images J1 to J8 to determine the category of a person P1 appearing in a photographic print. Specifically, in a case in which the number of times that the person P1 appears together with a user P2 appearing in the photographic print (the number of captured images in which the person P1 and the user P2 appear together) is equal to or greater than a threshold value, the category determination unit 12F determines that the person appearing in the photographic print belongs to the first category, and in a case in which the number of times that the person P1 appears together with the user P2 appearing in the photographic print is less than the threshold value, the category determination unit 12F determines that the person P1 appearing in the photographic print belongs to the second category. In this case, the face image of the user and the like are registered in advance and can be detected in the captured image.

In this manner, the category determination unit 12F performs category determination based on the number of captured images in which the user appears together with a person appearing in a photographic print, among the captured images owned by the user. Accordingly, it is possible to accurately determine the category of the person.

### (Aspect 2 of Determination)

Moreover, the category determination unit 12F performs an image search on the Internet for the person P1 appearing in the photographic print, and determines whether the person appearing in the photographic print belongs to the first category or the second category based on the result of the image search. As an example of Internet image search technology, "https://www.google.co.jp/imghp?hl=ja&ogbl" is used. For example, some users own photographic prints of celebrities and enjoy scanning the photographic prints. On the other hand, there are users who enjoy creating photographic prints mainly for their friends. In such a case, it is possible to estimate, without inquiring of the user, what purpose the photographic print is owned for through the determination of the category determination unit 12F, and natural recommendations can be made using the results of the category determination.

### (Aspect 3 of Determination)

Furthermore, in a case in which the category determination unit 12F detects a signature in the frame region and/or image region of a photographic print, the category determination unit 12F searches for the signature through an image search on the Internet. Then, in a case in which the image search result is found to be, for example, the signature of a celebrity, the category determination unit 12F determines that the signature belongs to the second category. Moreover, in a case in which there is no hit related to the signature in the image search results, the category determination unit 12F determines that the signature belongs to the first category. Accordingly, it is possible to accurately determine the category, resulting in more accurate recommendations.

### (Aspect 4 of Determination)

Furthermore, in a case in which the category determination unit 12F determines that the person P1 appearing in the photographic print belongs to the second category, the category determination unit 12F searches the Internet to specify the organization (such as an entertainment agency) to which the person P1 appearing in the photographic print belongs. Then, the recommendation unit 12E may recommend a product sold by the organization. Accordingly, the user can easily access products and the like that are directly recommended by the people and organizations appearing in the photographic prints, thereby making effective recommendations.

### (Aspect 5 of Determination)

In addition, the category determination unit 12F acquires a plurality of captured images owned by the user, and in a case in which a person appearing in the photographic print does not belong to the second category, the category determination unit 12F performs face recognition processing on the plurality of captured images, and in a case in which the difference between the facial feature values of any person is equal to or less than a threshold value, the category determination unit 12F determines that the person is a person belonging to the first category. Even in a case in which it is determined that a person appearing in a photographic print does not belong to the second category, it is difficult to determine whether the person is simply a passerby, a family member, a friend, or the like. In such cases, by referring to the image owned by the user, it is possible to accurately determine whether the person is simply a passerby or a person belonging to a first category such as a family member or a friend, resulting in accurate recommendations.

### (Aspect 6 of Determination)

The category determination unit 12F may also estimate the purpose of owning the photographic print depending on the category. For example, in the case of a person belonging to the first category, the category determination unit 12F can estimate that the owning purpose is that the person owns the photographic prints for a person related to the person. On the other hand, in the case of a person belonging to the second category, the category determination unit 12F can estimate that the owning purpose is that the person owns the photographic print in order to support the subject or the organization to which the subject belongs. Moreover, in a case in which the person is not determined to be in the first category or the second category, the category determination unit 12F can estimate that the owning purpose is that the person owns the photographic print in order to record a subject other than a person. The recommendation unit 12E can make more effective recommendations by making recommendations based on these owning purposes.

Although the first to fourth embodiments of the present invention have been described above, the embodiments of the present invention are not limited thereto. The present invention may be modified or applied as appropriate to other examples described below.

### <Another Example 1 (Application of Recommendation)>

Furthermore, in a case in which it is determined that the person appearing in the photographic print belongs to the first category, the information processing apparatus 10 constructs a channel for electronically exchanging information with fashion brands, shops, and the like. Furthermore, in a case in which it is determined that the person appearing in the photographic print belongs to a second category (a person supported by the user), the information processing apparatus 10 constructs a channel for electronically exchanging information with fan clubs, belonging companies, and event venues. Specifically, the information processing apparatus 10 connects to websites of fashion brands, shops, fan clubs, belonging companies, event venues, and the like via the Internet, enabling the exchange of information electronically. In a case in which it is determined that the person belongs to the first category, the information processing apparatus 10 estimates the user's preferences (for example, the pretty type or the teaser type) and makes recommendations of stores or events (for example, stores or events that are specialized for each preference among fashion or accessory stores) or products (for example, since the stores or events themselves correspond to a wide range of preferences, recommendations related to products of the category of the store or event that matches the user's preference are made). Accordingly, in the case in which it is determined that the person belongs to the first category, it is considered that recommendations of products for oneself, such as clothing and accessories, are likely to be accepted, and such recommendations become possible. Furthermore, in a case in which it is determined that the person belongs to the second category, the information processing apparatus 10 estimates the user's preferences (for example, the pretty type or the teaser type) and makes recommendations of groups and events (for example, groups and events that are specialized for each preference among various idol groups and idol events) or celebrity-related information (for example, since the groups and events themselves correspond to a wide range of preferences, recommendations related to members of the category of the group or event that matches the user's preferences are made). Accordingly, in the case of the second category, it is considered that recommendations of products and events to support the target person are likely to be accepted, and such recommendations become possible.

### <Another Example 2 (Application of Recommendation)>

Furthermore, in a case in which imaging position information of images (including scanned images) owned by the user is distributed over a wide range, the recommendation unit 12E may recommend events far from the user's home. On the other hand, in a case in which the imaging position information of the images owned by the user is not distributed over a wide range, nearby events or online events are recommended. In this case, the information processing apparatus 10 acquires the imaging position information of each owned image, and the information processing apparatus 10 also has the address of the user's residence. In addition, in an image platform including scanned images, an original image imaging location is defined separately (defined as a unique region or a new region of Exif). The original image imaging location searches the image region of the photographic print within the image platform, and in a case in which the original image is found, the imaging location information stored with the original image is read and is associated with the scanned image. Accordingly, it is possible to estimate the geographical action of users regarding the acquisition of photographic prints from scans of the photographic prints. Accordingly, it is possible to make optimal recommendations in accordance with the user's possible range of the geographical action estimated from photographic prints.

### <Another Example 3 (Application of Recommendation)>

In addition, the trained model used in the present invention can be trained not only from photographic prints, but also from related websites or the like. Accordingly, it is possible to construct a trained model that can flexibly respond to the strategies of stores, such as fashion brands. In addition, in a case in which handwritten designs are included, the designs applied as decorations are unknown, and the person who applied the decorations may not have any particular idea of what type they want to create. However, even in such cases, by continuing to train the trained model as described above, it is possible to recommend a product that matches the user's own latent preferences.

### <Another Example 4 (Recommendation)>

The store (fashion brand or the like) may have a database that categorizes user preferences and provides recommendations that match those preferences. Accordingly, even in a case in which the users themselves are not aware of their own preferences, stores can make recommendations to users that reflect their strategies. In a case in which the person himself/herself is not wearing a teaser type of clothes, but his/her decorations are of a teaser type, a teaser type of clothes is recommended.

### <Another Example 5 (Recommendation)>

The platform may have data associated with each user's preferences that can be estimated from photographic prints and the purchase of products or the like. Based on this data, a suggestion is made to the store to recommend this product to users with a certain preference. Accordingly, in a case in which fashion brands want to make some sort of categorized and efficient recommendations but they are unable to determine a decisive factor, the platform can actively provide data, enabling more accurate recommendations.

### <Another Example 6 (Recommendation)>

In a case in which a user has shared photographic prints with someone, the information processing apparatus 10 will give more weight to preferences that can be estimated from those photographic prints than to preferences that can be estimated from other images in recommending films, decoration materials, goods, and samples. Specifically, the information processing apparatus 10 acquires a plurality of photographic prints, and estimates the preference of a specific person based on the feature values of the plurality of photographic prints. In this case, it is determined whether or not the photographic print is shared with other users, and in a case in which the photographic print is shared, the weighting of the feature value of the shared photographic print is increased. This is because the shared photographic prints should clearly reflect one's own opinions. Accordingly, it is possible to accurately estimate the user's preferences and reflect the preferences in recommendations. Also, the input/output (IO) importance of the photographic print may be increased. This can be reflected in the IO and used to recommend products for creation.

### <Another Example 7 (Photographic Print)>

In the above description, an example has been described in which the preference of a specific person is estimated by acquiring decoration information applied to a photographic print. The application of the present invention is not limited to a photographic print, but can also be applied to other objects to which decorative information is applied. For example, it can also be applied to a case of a smartphone or the like.

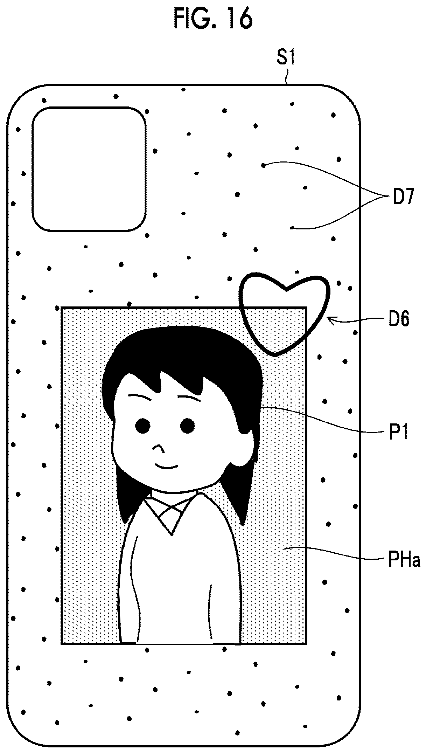

FIG. 16 is a conceptual diagram showing a smartphone case to which a decoration has been applied.

Case S1, similarly to the photographic print H, has a frame region Fa and an image region PHa. By inserting a photographic print or the like in which a person P1 appears into the image region PHa, the image region of the photographic print can be visually recognized. Furthermore, a decoration D6 and a decoration D7 are applied to the frame region Fa and/or the image region PHa. The information processing apparatus 10 acquires an image of the case S1 and analyzes the acquired image, thereby making it possible to estimate the preferences of a specific person, in the same manner as in the case of photographic print described above.

### <Embodiments of Present Invention in Virtual Worlds>

In the above, the embodiments of the present invention have been described with respect to a photographic print of a person or the like in the real world. However, the present invention can also be applied to virtual worlds such as a metaverse, which have been developed in recent years. In other words, in a virtual world where avatar objects corresponding to persons, camera objects capable of capturing images within the world, print objects that output the captured images as prints, functions that allow for drawing, such as handwriting or other means, on the print objects and thereby apply decorations, and products, services, events, communities, or friendships and the like that are subject to recommendation are defined, the present invention can be applied in the same manner as in the real world.

### <Others>

In the embodiments, a hardware structure of a processing unit that executes various processing is the following various processors. The various processors include a central processing unit (CPU) that is a general-purpose processor that functions as various processing units by executing software (program), a programmable logic device (PLD) that is a processor whose circuit configuration can be changed after manufacture, such as field-programmable gate array (FPGA), a dedicated electrical circuit that is a processor having a circuit configuration designed exclusively for executing a specific process such as an application-specific integrated circuit (ASIC), and the like.

One processing unit may be configured by one of various processors, or may be configured by two or more processors of the same type or different types (for example, a plurality of FPGAs or a combination of a CPU and an FPGA). In addition, a plurality of processing units may be configured by one processor. As an example of configuring a plurality of processing units by one processor, first, as represented by a computer, such as a client or a server, there is a form in which one processor is configured by a combination of one or more CPUs and software and this processor functions as a plurality of processing units. Second, as represented by a system-on-chip (SoC) or the like, there is a form of using a processor for realizing the function of the entire system including a plurality of processing units with one integrated circuit (IC) chip. In this way, various processing units are configured using one or more of the various processors as the hardware structure.

Furthermore, the hardware structure of these various processors is, more specifically, an electrical circuit (circuitry) in which circuit elements such as semiconductor elements are combined.

Each of the configurations and functions described above can be appropriately realized by using any hardware, software, or a combination of both. For example, the present invention can also be applied to a program that causes a computer to execute the above-mentioned processing steps (processing procedure), a computer-readable recording medium (non-transitory recording medium) in which such a program is recorded, or a computer in which such a program can be installed.

### <Supplementary Notes>

The above-described disclosure also includes the following inventions.

### (Aspect 1)

An information processing apparatus comprising a processor,
in which the processor is configured to:
acquire decoration information applied to a photographic print; and
estimate a preference of a specific person based on the decoration information.

### (Aspect 2)

The information processing apparatus according to Aspect 1,
in which the processor is configured to acquire an image of the photographic print and divide the image into a frame region and an image region.

### (Aspect 3)

The information processing apparatus according to Aspect 2,
in which the processor is configured to:
analyze a type or a pattern of the frame; and
estimate the preference of the specific person based on a result of the analysis.

### (Aspect 4)

The information processing apparatus according to any one of Aspects 1 to 3,
in which the processor is configured to recommend a frame or a decoration based on a result of the estimation.

### (Aspect 5)

The information processing apparatus according to Aspect 4,
in which the processor is configured to cause a display unit to display the recommended frame or the recommended decoration combined with the photographic print.

### (Aspect 6)

The information processing apparatus according to any one of Aspects 1 to 5,
in which the processor is configured to recommend a product based on a result of the estimation.

### (Aspect 7)

The information processing apparatus according to any one of Aspects 1 to 6,
in which the processor is configured to recommend an event, a community, or a friend based on a result of the estimation.

### (Aspect 8)

The information processing apparatus according to any one of Aspects 1 to 7,
in which the processor is configured to:
determine, based on the photographic print, whether a person appearing in the photographic print belongs to a first category having a close relationship to a user, or whether the person belongs to a second category having a distant relationship to the user; and
make a recommendation based on a result of the determination.

### (Aspect 9)

The information processing apparatus according to Aspect 8,
in which the processor is configured to:
acquire a plurality of captured images owned by the user; and
analyze the plurality of captured images, and determine that the person belongs to the first category in a case in which the number of times that the person appears together with the user is equal to or greater than a threshold value.

### (Aspect 10)

The information processing apparatus according to Aspect 8 or 9,
in which the processor is configured to:
acquire a plurality of captured images owned by the user; and
analyze the plurality of captured images, and determine that the person belongs to the second category in a case in which the number of times that the person appears together with the user is less than the threshold value.

### (Aspect 11)

The information processing apparatus according to Aspect 8,
in which the processor is configured to:
perform an image search on the Internet for the appearing person; and
determine whether the appearing person belongs to the first category or the second category based on a result of the image search.

### (Aspect 12)

The information processing apparatus according to Aspect 11,
in which the processor is configured to, in a case in which a signature is detected in the frame region and/or the image region, determine that the person belongs to the first category or the second category based on the result of the image search.

### (Aspect 13)

The information processing apparatus according to any one of Aspects 8 to 12,
in which the processor is configured to, in a case in which it is determined that the person belongs to the second category, specify an organization to which the person belongs by searching the Internet and recommend a product sold by the organization.

### (Aspect 14)

The information processing apparatus according to any one of Aspects 8 to 13,
in which the processor is configured to:
acquire a plurality of captured images owned by the user; and
in a case in which the person does not belong to the second category, perform face recognition processing on the plurality of captured images, and in a case in which a difference between facial feature values of any person is equal to or less than a threshold value, determine that the person is a person belonging to the first category.

### (Aspect 15)

The information processing apparatus according to any one of Aspects 8 to 14,
in which the processor is configured to:
recommend a product in a case in which it is determined that the person belongs to the first category; and
recommend an event in a case in which it is determined that the person belongs to the second category.

### (Aspect 16)

The information processing apparatus according to any one of Aspects 1 to 15,
in which the processor is configured to:
acquire a plurality of photographic prints;
estimate the preference of the specific person based on feature values of the plurality of photographic prints;
determine whether or not the photographic prints are shared with another user; and
in a case in which the photographic prints are shared, increase weighting of the feature values of the shared photographic prints.

### (Aspect 17)

An information processing system in which a terminal having a first processor and a server having a second processor are connected via a network, in which
the first processor is configured to:
   acquire an image of a photographic print; and
   transmit the image to the server, and
the second processor is configured to:
   detect decoration information from the image; and
   estimate a preference of a specific person based on the decoration information.

### (Aspect 18)

An information processing system in which a terminal having a first processor and a server having a second processor are connected via a network, in which
the first processor is configured to:
   acquire decoration information applied to a photographic print;
   extract a feature value of the decoration information; and
   transmit the feature value to the server, and
the second processor is configured to estimate a preference of a specific person based on the feature value.

### (Aspect 19)

An information processing method of an information processing apparatus including a processor, the information processing method comprising:
a step of acquiring, by the processor, decoration information applied to a photographic print; and
a step of estimating, by the processor, a preference of a specific person based on the decoration information.

### (Aspect 20)

A program for executing an information processing method of an information processing apparatus including a processor, the program causing the processor to execute:
a step of acquiring decoration information applied to a photographic print; and
a step of estimating a preference of a specific person based on the decoration information.

Although the examples of the present invention have been described above, it goes without saying that the present invention is not limited to the above-described embodiments, and various modifications can be made without departing from the gist of the present invention.

### Explanation of References

10: information processing apparatus
12: processor
12A: feature value extraction unit
12B: estimation unit
12C: print image acquisition unit
12D: division unit
12E: recommendation unit
12F: category determination unit
13: bus
14: memory
16: communication interface
18: display unit
20: camera
22: operation unit
50: information processing system
52: server
54: user terminal
56: processor

## Claims

1. An information processing apparatus comprising a processor,
wherein the processor is configured to:
acquire decoration information applied to a photographic print; and
estimate a preference of a specific person based on the decoration information.

2. The information processing apparatus according to claim 1,
wherein the processor is configured to acquire an image of the photographic print and divide the image into a frame region and an image region.

3. The information processing apparatus according to claim 2,
wherein the processor is configured to:
analyze a type or a pattern of the frame; and
estimate the preference of the specific person based on a result of the analysis.

4. The information processing apparatus according to claim 1,
wherein the processor is configured to recommend a frame or a decoration based on a result of the estimation.

5. The information processing apparatus according to claim 4,
wherein the processor is configured to cause a display unit to display the recommended frame or the recommended decoration combined with the photographic print.

6. The information processing apparatus according to claim 1,
wherein the processor is configured to recommend a product based on a result of the estimation.

7. The information processing apparatus according to claim 1,
wherein the processor is configured to recommend an event, a community, or a friend based on a result of the estimation.

8. The information processing apparatus according to claim 1,
wherein the processor is configured to:
determine, based on the photographic print, whether a person appearing in the photographic print belongs to a first category having a close relationship to a user, or whether the person belongs to a second category having a distant relationship to the user; and
make a recommendation based on a result of the determination.

9. The information processing apparatus according to claim 8,
wherein the processor is configured to:
acquire a plurality of captured images owned by the user; and
analyze the plurality of captured images, and determine that the person belongs to the first category in a case in which the number of times that the person appears together with the user is equal to or greater than a threshold value.

10. The information processing apparatus according to claim 8,
wherein the processor is configured to:
acquire a plurality of captured images owned by the user; and
analyze the plurality of captured images, and determine that the person belongs to the second category in a case in which the number of times that the person appears together with the user is less than the threshold value.

11. The information processing apparatus according to claim 8,
wherein the processor is configured to:
perform an image search on the Internet for the appearing person; and
determine whether the appearing person belongs to the first category or the second category based on a result of the image search.

12. The information processing apparatus according to claim 11,
wherein the processor is configured to, in a case in which a signature is detected in the frame region and/or the image region, determine that the person belongs to the first category or the second category based on the result of the image search.

13. The information processing apparatus according to claim 8,
wherein the processor is configured to, in a case in which it is determined that the person belongs to the second category, specify an organization to which the person belongs by searching the Internet and recommend a product sold by the organization.

14. The information processing apparatus according to claim 8,
wherein the processor is configured to:
acquire a plurality of captured images owned by the user; and
in a case in which the person does not belong to the second category, perform face recognition processing on the plurality of captured images, and in a case in which a difference between facial feature values of any person is equal to or less than a threshold value, determine that the person is a person belonging to the first category.

15. The information processing apparatus according to claim 8,
wherein the processor is configured to:
recommend a product in a case in which it is determined that the person belongs to the first category; and
recommend an event in a case in which it is determined that the person belongs to the second category.

16. The information processing apparatus according to claim 8,
wherein the processor is configured to:
acquire a plurality of photographic prints;
estimate the preference of the specific person based on feature values of the plurality of photographic prints;
determine whether or not the photographic prints are shared with another user; and
in a case in which the photographic prints are shared, increase weighting of the feature values of the shared photographic prints.

17. An information processing system in which a terminal having a first processor and a server having a second processor are connected via a network, wherein
the first processor is configured to:
acquire an image of a photographic print; and
transmit the image to the server, and
the second processor is configured to:
detect decoration information from the image; and
estimate a preference of a specific person based on the decoration information.

18. An information processing system in which a terminal having a first processor and a server having a second processor are connected via a network, wherein
the first processor is configured to:
acquire decoration information applied to a photographic print;
extract a feature value of the decoration information; and
transmit the feature value to the server, and
the second processor is configured to estimate a preference of a specific person based on the feature value.

19. An information processing method of an information processing apparatus including a processor, the information processing method comprising:
a step of acquiring, by the processor, decoration information applied to a photographic print; and
a step of estimating, by the processor, a preference of a specific person based on the decoration information.

20. A program for executing an information processing method of an information processing apparatus including a processor, the program causing the processor to execute:
a step of acquiring decoration information applied to a photographic print; and
a step of estimating a preference of a specific person based on the decoration information.

21. A non-transitory computer-readable recording medium on which the program according to claim 20 is recorded.
